# EUROPEAN PATENT APPLICATION

(11) **EP 2 996 013 A1**
(43) Date of publication of application: **16.03.2016**
(21) Application number: 15184293.7
(22) Date of filing: 08.09.2015
(51) Int. Cl.: G06F 1/16

(54) **METHOD FOR DETERMINING OPEN-CLOSE STATE OF PROTECTIVE COVER AND ELECTRONIC DEVICE THEREOF**

(30) Priority: 11.09.2014 KR 20140120281
(71) Applicant: Samsung Electronics Co., Ltd., Gyeonggi-do 16677 (KR)
(72) Inventor: MIN, Ki-Hong, Seoul (KR); CHO, Jeong-Ho, Suwon-si (KR); PARK, Chan-Hyoung, Hwaseong-si (KR)
(74) Representative: Nederlandsch Octrooibureau

(57) **Abstract**

An electronic device is provided. The electronic device includes: a first body; a second body being folded or unfolded with respect to the first body; a first sensor sensing a signal according to the folding/unfolding of the second body; a second sensor sensing a signal according to the folding/unfolding of the second body, in a position different from the first sensor; and a processor operatively connected with the first sensor and the second sensor. The processor determines a folded/unfolded state of the second body in accordance with the sensing signals of the first sensor and second sensor.

## Description

### TECHNICAL FIELD

The present disclosure relates to an electronic device and a control method thereof.

### BACKGROUND

Generally, users can mount protective covers to protect the entire sections or at least partial sections of electronic devices they carry, for example, smart phones or tablet Personal Computers (PCs). The protective covers are attachable to and detachable from the electronic devices, and can protect front surfaces of the electronic devices or rear surfaces thereof.

Generally, because the electronic devices are frequently used as portable devices, there is a possibility in which the electronic devices experience falling shocks, or experience damages to outer surfaces, such as scratches. As a result, protection of the protective covers for the electronic devices is needed. More particularly, because the electronic devices, such as the smart phones or the tablet PCs arrange displays (e.g., touch screen devices) in front, the aforementioned protection of the protective covers for the electronic devices is needed more for when the electronic devices are not used.

In addition, the protective covers must be attached to and detached from the electronic devices according to users' intention, and must not be arbitrarily released from the electronic devices regardless of users' intention. In other words, the users can detach the protective covers from the electronic devices to use the electronic devices, and can attach the protective covers to the electronic devices when the electronic devices are not in use.

In the middle of carrying an electronic device, a protective cover combined with the electronic device must be attached to and detached from the electronic device according to a user's intention. However, if the protective cover is arbitrarily released from the electronic device regardless of the user's intention, the electronic device can work unnecessarily. For example, if the protective cover is arbitrarily released from the electronic device, a display of the electronic device can work unnecessarily.

If the protective cover is arbitrarily released from the electronic device regardless of the user's intention as mentioned above, the electronic device works unnecessarily, causing unnecessary power consumption.

Therefore, a need exists for an apparatus and a method for determining a state of a protective cover combined with an electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an apparatus and a method for determining a state of a protective cover combined with an electronic device.

Another aspect of the present disclosure is to provide an apparatus and a method for determining a state of a protective cover combined with an electronic device by a sensor measuring a magnetic field.

Another aspect of the present disclosure is to provide an apparatus and a method for determining a state of a protective cover combined with an electronic device by a sensor measuring a distance.

Another aspect of the present disclosure is to provide an apparatus and a method for determining a state of a protective cover combined with an electronic device by all of a sensor measuring a magnetic field and a sensor measuring a distance.

Another aspect of the present disclosure is to provide an apparatus and a method for determining the driving or non-driving of an electronic device based on a determined state of a protective cover.

An electronic device according to an exemplary embodiment of the present disclosure may include: a first body; a second body being folded or unfolded with respect to the first body; a first sensor sensing a signal according to the folding/unfolding of the second body; a second sensor sensing a signal according to the folding/unfolding of the second body, in a position different from the first sensor; and a processor operatively connected with the first sensor and the second sensor. The processor may determine a folded/unfolded state of the second body in accordance with the sensing signals of the first sensor and second sensor.

According to one exemplary embodiment of the present disclosure, the first body may be the electronic device, and the second body may be a protective cover. The first sensor may be a hall sensor arranged in the first body facing a magnetic object installed in the second body, and detecting an intensity of a magnetic field of the magnetic object of the second body. The second sensor may be a proximity sensor arranged in a position diametrically opposite to the first sensor of the first body and sensing the proximity or non-proximity of the second body.

According to one exemplary embodiment of the present disclosure, the second sensor may be a photo sensor, and the processor may determine the folding or unfolding of the protective cover on the basis of the magnetic field intensity sensed by the first sensor and a distance sensed by the second sensor. According to one exemplary embodiment of the present disclosure, if an output of the first sensor is an unfolded state and an output of the second sensor is a folded state, the processor may determine that a state of the protective cover is a folded state.

According to one exemplary embodiment of the present disclosure, if an output of the first sensor is a folded state and an output of the second sensor is an unfolded state, the processor may determine that a state of the protective cover is an unfolded state.

According to one exemplary embodiment of the present disclosure, the processor may receive an output of the first sensor and, if the output of the first sensor is an unfolded state, the processor may activate the second sensor and receive an output of the second sensor

According to one exemplary embodiment of the present disclosure, the processor may analyze the received output of the second sensor and, if the output of the second sensor is a folded state, the processor may determine that a state of the protective cover is a folded state. According to one exemplary embodiment of the present disclosure, the processor may analyze the received output of the second sensor and, if the output of the second sensor is an unfolded state, the processor may determine that a state of the protective cover is an unfolded state.

According to one exemplary embodiment of the present disclosure, if the output of the first sensor is a folded state, the processor determines that a state of the protective cover is a folded state.

A control method of an electronic device according to one exemplary embodiment of the present disclosure may include: receiving a first sensing signal and a second sensing signal according to the folding/unfolding of a first body and second body of the electronic device; and determining a folded or unfolded state of the second body, based on the first sensing signal and the second sensing signal. The first sensing signal may be sensed by a first sensor, and the second sensing signal may be sensed by a second sensor installed in a position different from the first sensor, and the determination may be determined by a processor operatively connected with the first sensor and the second sensor.

According to one exemplary embodiment of the present disclosure, the determining may determine, by the processor, the folding or unfolding of the protective cover on the basis of the magnetic field intensity sensed by the first sensor and a distance sensed by the second sensor. According to one exemplary embodiment of the present disclosure, if an output of the first sensor is an unfolded state and an output of the second sensor is a folded state, the determining may determine, by the processor, that a state of the protective cover is a folded state.

According to one exemplary embodiment of the present disclosure, if an output of the first sensor is a folded state and an output of the second sensor is an unfolded state, the determining may determine, by the processor, that a state of the protective cover is an unfolded state.

According to one exemplary embodiment of the present disclosure, the determining may receive, by the processor, an output of the first sensor and, if the output of the first sensor is an unfolded state, activate the second sensor and receive an output of the second sensor.

According to one exemplary embodiment of the present disclosure, the determining may analyze, by the processor, the received output of the second sensor and, if the output of the second sensor is a folded state, may determine that a state of the protective cover is a folded state. According to one exemplary embodiment of the present disclosure, the determining may analyze, by the processor, the received output of the second sensor and, if the output of the second sensor is an unfolded state, determines that a state of the protective cover is an unfolded state. According to one exemplary embodiment of the present disclosure, if the output of the first sensor is a folded state, the determining may determine, by the processor, that a state of the protective cover is a folded state.

A computer-readable storage medium according to an exemplary embodiment of the present disclosure may store a program for performing a method comprising receiving a first sensing signal and a second sensing signal according to the folding/unfolding of a first body and second body of the electronic device, and determining a folded or unfolded state of the second body, based on the first sensing signal and the second sensing signal. The first sensing signal may be sensed by a first sensor, and the second sensing signal may be sensed by a second sensor installed in a position different from the first sensor, and the determination may be determined by a processor operatively connected with the first sensor and the second sensor.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to an embodiment of the present disclosure;
FIG. 2 illustrates an electronic device according to an embodiment of the present disclosure;
FIG. 3 illustrates an electronic device according to an embodiment of the present disclosure;
FIGS. 4A and 4B illustrate an electronic device according to an embodiment of the present disclosure;
FIG. 5 is a block diagram illustrating a construction of an electronic device according to an embodiment of the present disclosure;
FIG. 6 is a block diagram illustrating a construction of an electronic device according to an embodiment of the present disclosure;
FIG. 7 illustrates a sensor according to an embodiment of the present disclosure;
FIGS. 8A and 8B illustrate an electronic device according to an embodiment of the present disclosure;
FIG. 9 is a block diagram illustrating a construction of an electronic device according to an embodiment of the present disclosure;
FIGS. 10A and 10B illustrate an electronic device according to an embodiment of the present disclosure;
FIG. 11 is a block diagram illustrating a construction of an electronic device according to an embodiment of the present disclosure;
FIG. 12 is a flowchart illustrating a method for power consumption improvement according to an embodiment of the present disclosure;
FIG. 13 is a flowchart illustrating a method for power consumption improvement according to an embodiment of the present disclosure; and
FIG. 14 is a block diagram illustrating a construction of an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The expressions "comprise" or "may comprise" usable in various embodiments of the present disclosure indicate the existence of disclosed corresponding functions, operations, or constituent elements, and do not limit additional one or more functions, operations, or constituent elements. In addition, in various embodiments of the present disclosure, the terms "comprise" or "have" are to designate the existence of features stated in the specification, numerals, operations, constituent elements, components, or a combination of them, and it should be understood that the terms "comprise" or "have" are not to previously exclude the possibility of existence or addition of one or more other features, numerals, operations, constituent elements, components, or combinations of them.

In various embodiments of the present disclosure, the expressions, such as "or" include any and all combinations of words enumerated together. For example, "A or B" may include A, or may include B, or may include all A and B.

The expressions "1st", "2nd", "first" or "second" used in various embodiments of the present disclosure may modify various constituent elements of various embodiments of the present disclosure, but do not intend to limit the corresponding constituent elements. For example, the expressions do not limit the order and/or importance of the corresponding constituent elements. The expressions may be used to distinguish one constituent element from another constituent element. For example, all of a first user device and a second user device are user devices, and represent different user devices. For example, a first constituent element may be named as a second constituent element without departing from the scope of right of various embodiments of the present disclosure. Likely, even a second constituent element may be named as a first constituent element.

When it is mentioned that any constituent element is "connected" or "accessed" to another constituent element, the any constituent element may be directly connected or accessed to the another constituent element, but it should be understood that new other constituent element may also exist between the any constituent element and the another constituent element. On the other hand, when it is mentioned that any constituent element is "directly connected" or "directly accessed" to another constituent element, it should be understood that no new other constituent element exists between the any constituent element and the another constituent element.

The terms used in various embodiments of the present disclosure are used to just describe specific embodiments, and do not intend to limit various embodiments of the present disclosure.

Unless defined otherwise, all the terms used herein including the technological or scientific terms have the same meaning as those commonly understood by a person having ordinary knowledge in the art which various embodiments of the present disclosure belongs to. The terms as defined in a general dictionary should be interpreted as having the same meanings as the contextual meanings of a related technology, and are not interpreted as having ideal or excessively formal meanings unless defined clearly in various embodiments of the present disclosure.

An electronic device according to various embodiments of the present disclosure may be a device consisting of a first body and a second body capable of contacting (i.e., folding) with or separating (i.e., unfolding) from the first body, and including a sensor function. For example, the electronic device may include at least one of a smartphone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), a Moving Picture Experts Group (MPEG-1 or MPEG-2) Audio Layer 3 (MP3) player, a mobile medical instrument, a camera, or a wearable device (e.g., a Head Mounted Display (HMD), such as electronic glasses, electronic clothes, an electronic bracelet, an electronic necklace, an appcessory, an electronic tattoo, a smart watch, and the like).

According to various embodiments of the present disclosure, the electronic device may be a smart home appliance consisting of a first body and a second body, and having a sensor function. The smart home appliance, for example, the electronic device may include at least one of a television (TV), a Digital Video Disc (DVD) player, an audio system, a refrigerator, an air conditioner, a cleaner, an oven, a microwave, a washing machine, an air cleaner, a set-top box, a TV box (for example, Samsung HomeSync^{™}, Apple TV^{™}, or Google TV^{™}), a game console, an electronic dictionary, an electronic locking system, a camcorder, an electronic frame, and the like.

According to various embodiments of the present disclosure, the electronic device may include at least one of various medical instruments (e.g., Magnetic Resonance Angiography (MRA), Magnetic Resonance Imaging (MRI), Computerized Tomography (CT), a moving-camera, and an ultrasonic machine), a navigation device, a Global Positioning System (GPS) receiver, an Event Data Recorder (EDR), a Flight Data Recorder (FDR), a car infotainment device, an electronic equipment for ship (e.g., a navigation device for ship and a gyrocompass), avionics, a security instrument, a head unit for car, an industrial or home robot, an Automatic Teller's Machine (ATM) of a financial institution, a Point Of Sales (POS) of a shop, and the like.

According to various embodiments of the present disclosure, the electronic device may include at least one of a part of furniture or building/structure including a first body and a second body, and a sensor function, an electronic board, an electronic signature receiving device, a projector, or various metering instruments (e.g., tap water, electricity, gas, or a radio wave metering instrument). The electronic device according to various embodiments of the present disclosure may be one of the aforementioned various devices or a combination of two or more of them. In addition, the electronic device according to various embodiments of the present disclosure may be a flexible device. In addition, it is obvious to those skilled in the art that the electronic device according to various embodiments of the present disclosure is not limited to the aforementioned instruments.

Below, an electronic device according to various embodiments will be described with reference to the accompanying drawings. The term 'user' used in various embodiments may denote a person who uses the electronic device or a device (e.g., an artificial intelligent electronic device) which uses the electronic device.

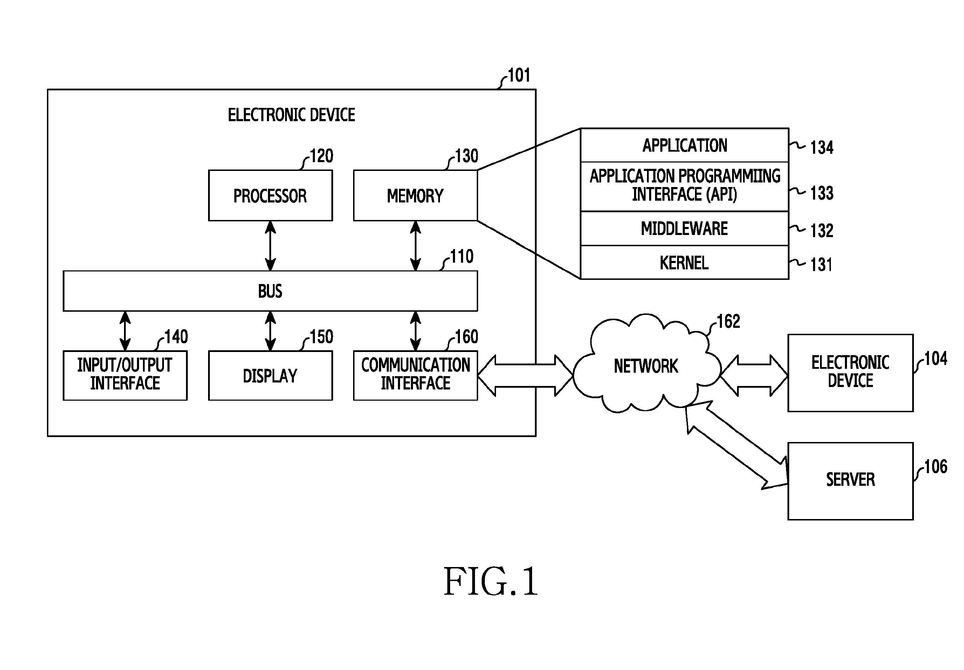

FIG. 1 illustrates a network environment including an electronic device according to various embodiments of the present disclosure.

Referring to FIG. 1, an electronic device 101 may include a bus 110, a processor 120, a memory 130, an input/output interface 140, a display 150, and a communication interface 160.

The bus 110 may be a circuit connecting the aforementioned constituent elements with one another and forwarding communication (e.g., a control message) between the aforementioned constituent elements.

The processor 120 may, for example, receive instructions from the aforementioned other constituent elements (e.g., the memory 130, the input/output interface 140, the display 150, and the communication interface 160) through the bus 110, and decipher the received instructions, and execute operation or data processing according to the deciphered instructions.

The memory 130 may store an instruction or data that is received from the processor 120 or the other constituent elements (e.g., the input/output interface 140, the display 150, and the communication interface 160) or is generated by the processor 120 or the other constituent elements. The memory 130 may include, for example, programming modules, such as a kernel 131, a middleware 132, an Application Programming Interface (API) 133, or an application 134. The aforementioned programming modules each may consist of software, firmware, hardware or a combination of at least two or more of them.

The kernel 131 may control or manage system resources (e.g., the bus 110, the processor 120, or the memory 130) used for executing operations or functions implemented in the remnant other programming modules, for example, the middleware 132, the API 133, or the application 134. In addition, the kernel 131 may provide an interface enabling the middleware 132, the API 133, or the application 134 to access and control or manage the individual constituent element of the electronic device 101.

The middleware 132 may perform a relay role of enabling the API 133 or the application 134 to communicate and exchange data with the kernel 131. In addition, in relation to work requests received from the application 134, the middleware 132 may, for example, perform control (e.g., scheduling or load balancing) for the work requests by using a method of allocating at least one of the applications 134 priority order capable of using the system resources (e.g., the bus 110, the processor 120, or the memory 130) of the electronic device 101.

The API 133 is an interface enabling the application 134 to control a function provided by the kernel 131 or the middleware 132. The API 133 may include, for example, at least one interface or function (e.g., an instruction) for file control, window control, picture processing, or character control.

According to various embodiments of the present disclosure, the application 134 may include a Short Message Service (SMS)/Multimedia Message Service (MMS) application, an electronic mail (e-mail) application, a calendar application, an alarm application, a health care application (e.g., an application measuring momentum, or blood sugar), or environment information application (e.g., an application providing air pressure, humidity, or temperature information). Additionally or alternatively, the application 134 may be an application related with information exchange between the electronic device 101 and an external electronic device (e.g., another electronic device 104). The application related with the information exchange may include, for example, a notification relay application for relaying specific information to the external electronic device, or a device management application for managing the external electronic device.

For example, the notification relay application may include a function of relaying notification information generated in another application (e.g., the SMS/MMS application, the e-mail application, the health care application, the environment information application, and the like) of the electronic device 101 to the external electronic device (e.g., the other electronic device 104). Additionally or alternatively, the notification relay application may, for example, receive notification information from the external electronic device (e.g., the other electronic device 104) and provide the received notification information to a user.

The device management application may, for example, manage (e.g., install, delete, update, and the like) a function (e.g., turn-on/turn-off of the external electronic device itself (or some constituent components) or adjustment of a brightness (or resolution) of a display) of at least a part of the external electronic device (e.g., the other electronic device 104) communicating with the electronic device 101, an application operating in the external electronic device, or a service (e.g., a telephony service, a message service, and the like) provided in the external electronic device.

According to an embodiment of the present disclosure, the application 134 may include an application designated according to an attribute (e.g., the kind of electronic device) of the external electronic device (e.g., the other electronic device 104). For example, if the external electronic device is an MP3 player, the application 134 may include an application related with music playback.

Similarly, if the external electronic device is a mobile medical instrument, the application 134 may include an application related with health care. According to an embodiment of the present disclosure, the application 134 may include at least one of an application designated to the electronic device 101 or an application received from the external electronic device (e.g., a server 106 or the other electronic device 104).

The input/output interface 140 may forward an instruction or data, which is inputted from a user through an input/output device (e.g., a sensor, a keyboard, a touch screen, and the like), for example, to the processor 120, the memory 130 and the communication interface 160 through the bus 110. For example, the input/output interface 140 may provide data about a user's touch inputted through the touch screen, to the processor 120.

In addition, the input/output interface 140 may, for example, output an instruction or data, which is received from the processor 120, the memory 130 and the communication interface 160 through the bus 110, through an input/output device (e.g., a speaker, a display, and the like). For example, the input/output interface 140 may output voice data, which is processed through the processor 120, to the user through the speaker.

The display 150 may display various information (e.g., multimedia data, text data, and the like) to a user.

The communication interface 160 may connect communication between the electronic device 101 and the external device (e.g., the other electronic device 104 or the server 106). For example, the communication interface 160 may be connected to a network 162 through wireless communication or wired communication, and communicate with an external device.

The wireless communication may include, for example, at least one of Wireless Fidelity (WiFi), Bluetooth (BT), near field communication (NFC), GPS or cellular communication (e.g., Long Term Evolution (LTE), LTE-Advanced (LTE-A), Code Division Multiple Access (CDMA), Wideband CDMA (WCDMA), Universal Mobile Telecommunications System (UMTS), Wireless Broadband (WiBro), or Global System for Mobile Communications (GSM)). The wired communication may include, for example at least one of a Universe Serial Bus (USB), a High Definition Multimedia Interface (HDMI), a Recommended Standard-232 (RS-232), or a Plain Old Telephone Service (POTS).

According to an embodiment of the present disclosure, the network 162 may be a telecommunications network. The telecommunications network may include at least one of a computer network, the Internet, Internet of things, a telephone network, and the like.

According to an embodiment of the present disclosure, a protocol (e.g., a transport layer protocol, a data link layer protocol, or a physical layer protocol) for communication between the electronic device 101 and an external device may be supported in at least one of the application 134, the application programming interface 133, the middleware 132, the kernel 131, or the communication interface 160.

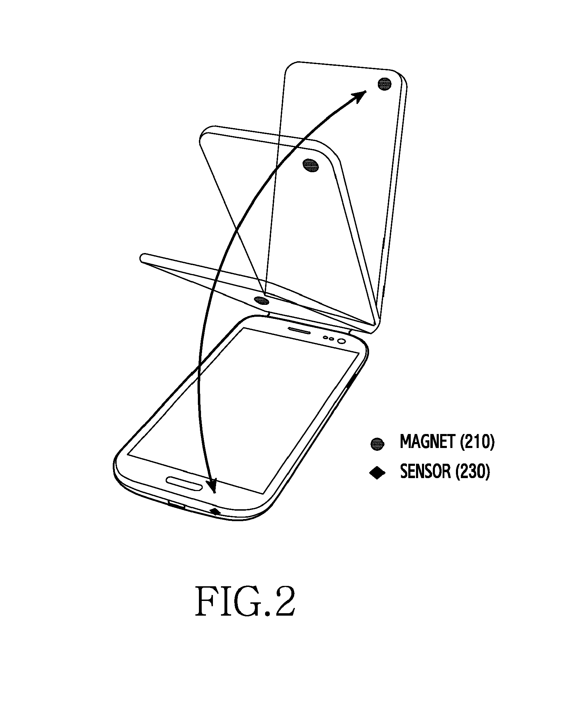

FIG. 2 illustrates an electronic device according to an embodiment of the present disclosure.

Referring to FIG. 2, the electronic device may be a mobile phone of a folder type or a device of a smart phone type, for example. In addition, the electronic device may include a magnet 210 and a sensor 230. The sensor 230 may be also referred to as a state recognition sensor. For example, the sensor 230 may include a hall Integrated Circuit (IC). Herein, the hall IC indicates an integrated circuit including a hall sensor that uses the hall-effect representing a phenomenon in which electromotive force is induced in the vertical direction of an electric current and a magnetic field when the magnetic field is applied in the vertical direction of the electric current.

The electronic device may determine if the electronic device is in an open state or is in a close state through the magnet 210 and the sensor 230. For example, the sensor 230 may measure an intensity value of a magnetic field induced by the magnet 210. In this case, if it is determined that the measured intensity value of the magnetic field is equal to or is greater than a certain threshold value, the electronic device may be determined to be in the close state.

On the other hand, if it is determined that the measured intensity value of the magnetic field is less than the certain threshold value, the electronic device may be determined to be in the open state. For example, the close state may include a state in which a folder of the mobile phone of the folder type is closed. In addition, the open state may include a state in which the folder of the mobile phone of the folder type is open. In addition, to accomplish accurate determination of the open state and close state, a position of the sensor 230 and a position of the magnet 210 included in the folder are needed to be consistent with each other when the folder is folded.

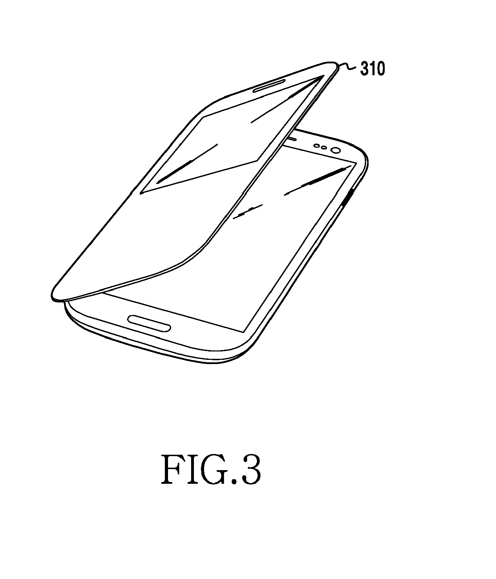

FIG. 3 illustrates an electronic device according to an embodiment of the present disclosure.

Referring to FIG. 3, the electronic device may be a device of a smart phone type, for example. The electronic device according to various exemplary embodiments of the present disclosure may consist of a first body and a second body, and include a connector connecting the first body and the second body. The connector may rotate the second body to make the second body contact with the first body or separate the second body from the first body, or may push and pull the second body to make the second body contact with the first body or separate the second body from the first body. The connector may be of flexible materials which may move to overlap the second body with the first body. For example, the connector may be formed of flexible materials connected from the second body and combined to the first body. The first body may include a circuit part of the electronic device, a battery, and a part or whole of a display. The second body may include a circuit part of the electronic device, a battery, a display, and a part or whole of a cover.

In various exemplary embodiments of the present disclosure, a description will be made by way of an example in which the first body is the electronic device, and the second body is a protective cover. For example, the second body may include a first protective cover protecting a rear surface of the first body, a second protective cover capable of protecting a front surface of the first body, and a connector connecting the first protective cover and the second protective cover and rotating the second protective cover to overlap the second protective cover with the front surface of the first body or separate the second protective cover from the front surface of the first body. In the following description, the protective cover will be used as a term representing the second protective cover.

Referring to FIG. 3, a protective cover 310 being the second body combined with the electronic device being the first body may exist separately, and the protective cover 310 may include a magnet or a magnetic object (not shown in FIG. 3). In addition, the electronic device may include a sensor (not shown in FIG. 3). The sensor may be referred to as a state recognition sensor. For example, the sensor may include a hall IC.

The electronic device may determine if the protective cover 310 is in an open state or is in a close state through the magnet or magnetic object included in the protective cover 310 and the sensor included in the electronic device. For example, the sensor may measure an intensity value of a magnetic field induced by the magnet or magnetic object. In this case, if it is determined that the measured intensity value of the magnetic field is equal to or is greater than a certain threshold value, the electronic device may determine that the protective cover 310 is in the close state.

On the other hand, if the measured intensity value of the magnetic field is less than the certain threshold value, the electronic device may determine that the protective cover 310 is in the open state. In this case, to accomplish the accurate determination of the open state and close state, a position of the sensor and a position of the magnet or magnetic object included in the protective cover 310 are needed to be consistent with each other when the protective cover 310 is closed.

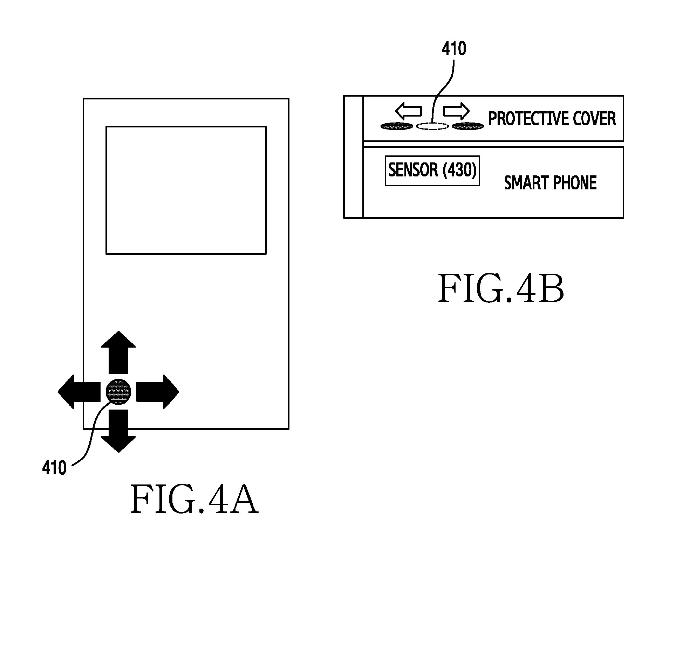

FIG. 4A illustrates a plane diagram of the electronic device according to an embodiment of the present disclosure, and FIG. 4B illustrates a cross section of the electronic device.

FIGS. 4A and 4B illustrate a close state of a protective cover combined with the electronic device. The electronic device may include a smart phone device, and the protective cover may include a magnet 410. In addition, the electronic device may include a sensor 430. The sensor 430 may be also referred to as a state recognition sensor. For example, the sensor 430 may include a hall IC.

FIGS. 4A and 4B illustrate a state in which the magnet 410 included in the protective cover can move in four directions. In other words, because the protective cover is combined with the electronic device but is not completely fixed to the electronic device, there is a possibility in which the protective cover moves minutely or is detached from the electronic device regardless of a user's intention, in the middle of carrying the electronic device.

More particularly, when a user moves with putting the electronic device in his/her pocket or bag, there is an increasing possibility in which the protective cover moves minutely or is detached from the electronic device regardless of the user's intention. In this case, in an initial close state of the protective cover, the electronic device may wrongly determine that the protective cover is open.

When assuming the sensor 430 as a basis, if the protective cover moves minutely or is detached from the electronic device, an intensity of a magnetic field of the magnet 410 included in the protective cover is decreased with respect to the electronic device. At this time, the sensor 430 included in the electronic device may measure a present intensity of the magnetic field of the magnet 410 included in the protective cover. If it is determined that the present intensity value of the magnetic field measured by the sensor 430 is less than a threshold value, the electronic device may determine that the protective cover is in an open state.

Except that the protective cover is detached from the electronic device according to a user's intention, if the protective cover moves minutely or is detached from the electronic device regardless of the user's intention as mentioned above, there is an issue in which the electronic device wrongly recognizes as if a present state of the protective cover was an open state, despite the fact that the electronic device must recognize that the present state of the protective cover is a close state as ever.

If the electronic device presently recognizes that the protective cover is in the open state as mentioned above, the electronic device drives another device included in the electronic device. This results in unnecessary power consumption and is described below.

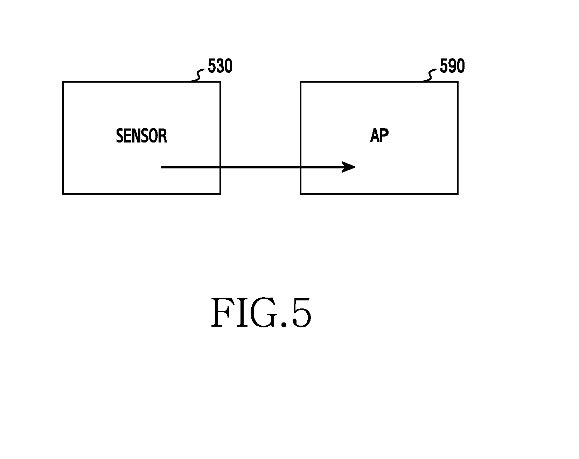

FIG. 5 is a block diagram illustrating a construction of an electronic device according to an embodiment of the present disclosure.

Referring to FIG. 5, the electronic device may include a sensor 530 and an Application Processor (AP) 590. The sensor 530 may be also referred to as a state recognition sensor. For example, the sensor 530 may include a hall IC.

The AP 590 may drive an operating system or an application program to control a plurality of hardware or software constituent elements connected to the AP 590, and may perform processing and operation of various data including multimedia data. The AP 590 will be described below.

As mentioned in FIGS. 4A and 4B, in a case where a protective cover connected with an electronic device moves minutely or is detached from the electronic device in the middle of carrying the electronic device, when assuming the sensor 530 as a basis, an intensity of a magnetic field of a magnet or magnetic object included within the protective cover is decreased with respect to the electronic device. At this time, the sensor 530 may measure a present intensity of the magnetic field of the magnet or magnetic object included within the protective cover. If it is determined that the present intensity value of the magnetic field measured by the sensor 530 is less than a threshold value, the electronic device may determine that the protective cover is in an open state.

If it is determined that the protective cover is in the open state, the electronic device determines that a present state of the electronic device is the open state substantially desired by a user and thus, the electronic device activates various constituent elements included within the electronic device. For example, the electronic device may drive the AP 590 to activate a display (not shown in FIG. 5) included in the electronic device, or directly activate the display. In addition, the electronic device may activate a Power Management IC (PMIC) (not shown in FIG. 5) to manage power of the electronic device.

However, except that the protective cover is detached from the electronic device according to a user's intention, if the protective cover moves minutely or is detached from the electronic device regardless of the user's intention as mentioned earlier, the electronic device must determine that a user has no mind to use the electronic device and thus, the electronic device must recognize that a present state of the protective cover is a close state.

Despite so, if the electronic device wrongly recognizes that the present state of the protective cover is the open state, the electronic device unnecessarily drives a device, such as the AP 590, the display, or the PMIC included in the electronic device as described earlier, and this leads to unnecessary power consumption.

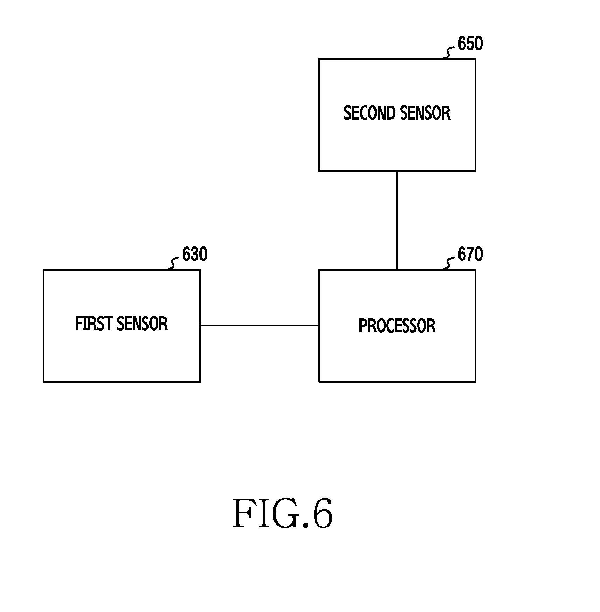

FIG. 6 is a block diagram illustrating a construction of an electronic device according to an embodiment of the present disclosure.

Referring to FIG. 6, the electronic device includes a first sensor 630, a second sensor 650, and a processor 670 operatively connected with the first sensor 630 and the second sensor 650 and determining an open or close state of the electronic device.

The first sensor 630 may be a hall sensor, and the second sensor 650 may be a proximity sensor. The open/close of the electronic device may be the open/close of a protective cover. The processor 670 may measure an intensity of a magnetic field of the first sensor 630 and/or a distance with the protective cover and determine the open/close of the protective cover.

The electronic device according to various exemplary embodiments of the present disclosure may install the first sensor 630 and the second sensor 650 in different positions, i.e., diametrical opposition positions. For example, the second sensor 650 may be installed in an upper end part of the electronic device, and the first sensor 630 may be installed in a lower end part of the electronic device. If the first sensor 630 and the second sensor 650 are installed to be separated from each other, the processor 670 may sense an On/Off detection signal of the second body (for example, the protective cover) in a separated position.

The first sensor 630 may be also referred to as a state recognition sensor. For example, the first sensor 630 may include a hall IC. In addition, the second sensor 650 may include a proximity sensor. The proximity sensor may include a fiber-optic proximity sensor, a high-frequency oscillation-type proximity sensor, an electromagnetic proximity sensor, and a capacitive proximity sensor.

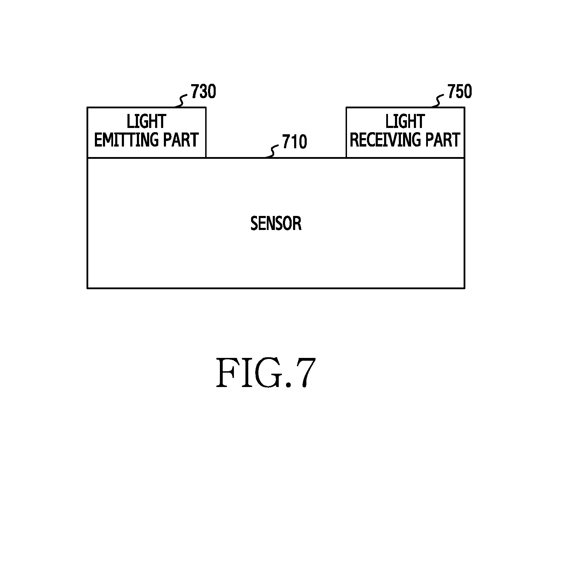

The proximity sensor generally determines a proximity of an object through Infrared (IR). Depending on a specific threshold value, the proximity may be determined differently. A construction and operation of the proximity sensor will be described in FIG. 7 below.

The processor 670 may include a Micro Controller Unit (MCU). The MCU is a dedicated processor for controlling a specific system. According to an embodiment of the present disclosure, the MCU may generally control a plurality of sensors included in the electronic device. In addition, the MCU has a feature of being a low power processor having small power consumption compared to an AP.

For example, the AP consumes, upon driving, an electric current of hundreds of milliamperes (mA) to the minimum whereas the MCU consumes, upon driving, an electric current of about 1 mA. Accordingly, before the AP is operated, a system is controlled through the MCU and thereafter, only if needed, the AP is operated and, otherwise, the AP is not operated. By doing so, it can greatly decrease power consumption of the whole system. Also, the second sensor 650 may use a camera. If the second sensor 650 is the camera, the processor 670 may analyze an image (e.g., a figure) acquired from the camera or analyze brightness to determine an On/Off state.

In accordance with an embodiment of the present disclosure, the content of the present disclosure will be described below. Firstly, if there is a change of a magnetic field induced by a magnetic object provided in a protective cover combined with an electronic device, the first sensor 630 measures a present intensity of the magnetic field of the magnetic object.

For example, when assuming the first sensor 630 as a basis, an instantaneous change of a position of the magnet or other magnetic object included in the protective cover leads to a change of a magnetic field of the magnet or other magnet object. In this case, on the premise that there is a change of a state of the protective cover, the first sensor 630 measures a present intensity of the magnetic field of the magnetic object. Thereafter, the first sensor 630 transmits the measured intensity value of the magnetic field to the processor 670.

After receiving the magnetic field intensity from the first sensor 630, the processor 670 transmits a signal for driving the second sensor 650 connected with the processor 670, to the second sensor 650, thereby activating the second sensor 650.

Upon receiving the signal, the second sensor 650 uses infrared to measure a distance between the protective cover and the second sensor 650. The second sensor 650 transmits the distance value to the processor 670. Herein, a construction and concrete distance measurement scheme of the second sensor 650 are described in FIG. 7 below.

Thereafter, the processor 670 determines a state of the protective cover, based on the magnetic field intensity value received from the first sensor 630 and the distance value received from the second sensor 650.

If it is determined that the intensity value of the magnetic field measured through the first sensor 630 is equal to or is greater than a first threshold value, the processor 670 may determine that a first state of the protective cover is a close state. On the other hand, if it is determined that the intensity value of the magnetic field measured through the first sensor 630 is less than the first threshold value, the processor 670 may determine that the first state of the protective cover is an open state.

In addition, in a case where the distance value between the protective cover and the second sensor 650 measured through the second sensor 650 is less than a second threshold value, the processor 670 may determine that a second state of the protective cover is a proximal state. On the other hand, if the distance value is equal to or is greater than the second threshold value, the processor 670 may determine that the second state of the protective cover is a non-proximal state.

At this time, the threshold value may be determined as an arbitrary value. According to an embodiment of the present disclosure, since it is meaningful to distinguish a case that the protective cover is attached to the electronic device and a case that the protective cover is detached from the electronic device, the second threshold value is desirably determined as a relatively small value of the unit of millimeters (mm). As a result, it may be determined that the proximal state of the second state is substantially the same state as the close state of the first state, and it may be determined that the non-proximal state of the second state is substantially the same state as the open state of the first state.

If the first state and the second state are each determined as above, the processor 670 may determine the open or close state of the protective cover according to a condition of ANDing the first state and the second state.

If the first state is determined to be the open state and the second state is determined to be the non-proximal state, the processor 670 finally determines that the protective cover is open normally, and activates various constituent elements included within the electronic device such that a user can use the electronic device in a normal manner. For example, the electronic device may drive an AP (not shown in FIG. 6) to activate a display (not shown in FIG. 6) included in the electronic device. In addition, the electronic device may activate a PMIC (not shown in FIG. 6) to manage power of the electronic device.

If the first state is determined to be the close state and the second state is determined to be the proximal state, the processor 670 finally determines that the protective cover is close normally, and maintains a present state of the electronic device as ever, without an operation of activating various constituent elements included in the electronic device.

However, if detecting information of the sensors are inconsistent with each other as in a case where the first state is determined to be the open state and the second state is determined to be the proximal state, this causes an issue of making unclear on a basis of determination of which sensor the electronic device performs a subsequent operation.

According to an embodiment of the present disclosure, the processor 670 determines that in a case where the first state is determined to be the open state and the second state is determined to be the proximal state, it is an abnormal state in which the protective cover moves minutely or is detached from the electronic device regardless of the user's intention, not a normal state in which the protective cover moves minutely or is detached from the electronic device according to a user's intention.

In other words, in a case where the first state is determined to be the open state and the second state is determined to be the proximal state, the processor 670 determines that the first sensor 630 wrongly recognizes as if the protective cover moved minutely or was detached from the electronic device according to a user's intention in a normal manner, despite the fact that the protective cover moves minutely or is detached from the electronic device regardless of the user's intention.

As a result, with disregarding the determination of the first sensor 630, the processor 670 finally determines that the protective cover is close, not open, based on the determination of the second sensor 650 that the protective cover is in the proximal state. Accordingly, the processor 670 maintains a present state of the electronic device as ever, without an operation of activating various constituent elements included in the electronic device.

FIG. 7 illustrates a sensor according to an embodiment of the present disclosure.

Referring to FIG. 7, a cross section of a sensor 710 according to an embodiment of the present disclosure is illustrated. The sensor 710 may include a proximity sensor. In addition, the sensor 710 may include a light emitting part 730 and a light receiving part 750, and measure distance information with an adjacent object by using the characteristic of light which travels straight and reflects back. Herein, light may include infrared.

For example, the light emitting part 730 may emit a certain intensity of infrared in a specific direction. Herein, it may be assumed that the certain intensity of infrared is relatively equal to 10. If the light receiving part 750 receives no infrared, or receives infrared of a slight degree, for example, infrared of a relative intensity of 1 to 3, the sensor 710 may determine that an object enough to reflect infrared does not exist within an adjacent distance from the sensor 710. As a result, the sensor 710 may recognize that no object exists in a proximal position.

On the contrary, if the light receiving part 750 receives infrared of a specific intensity or more, for example, infrared of a relative intensity of 8 or more, the sensor 710 may determine that an object enough to reflect infrared exists within the adjacent distance from the sensor 710. As a result, the sensor 710 may recognize that the object exists in a position adjacent to the senor 710. In this case, the traveling time of infrared may be calculated by using a difference between a time at which the light emitting part 730 emits the infrared and a time at which the light receiving part 750 receives the infrared. As a result, distance information between the sensor 710 and the adjacent object may be also calculated through the time information and the speed of light.

In accordance with an embodiment of the present disclosure, in a case where the sensor 710 is included within the electronic device of the present disclosure, the sensor 710 may measure a distance between the protective cover and the electronic device through the above process, and may determine whether the protective cover is in a relatively proximal state or is in a non-proximal state based on the distance information.

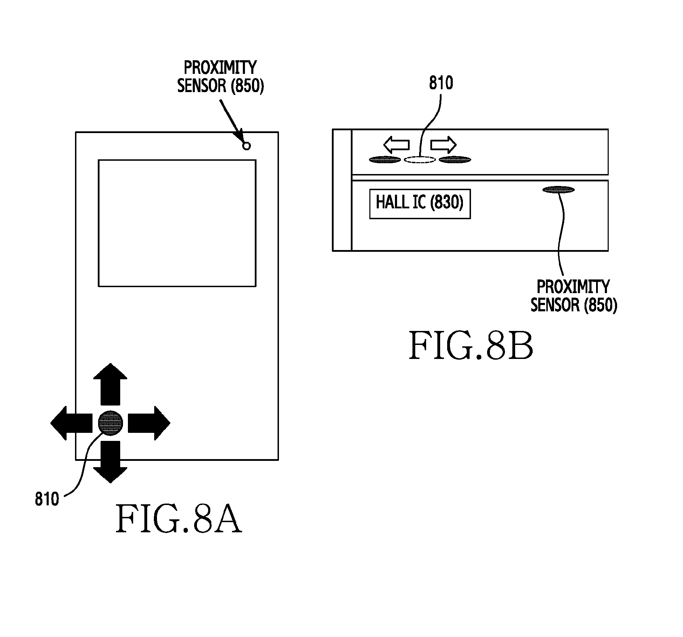

FIG. 8A illustrates a plane diagram of the electronic device according to an embodiment of the present disclosure, and FIG. 8B illustrates a cross section of the electronic device.

Referring to FIGS. 8A and 8B, a close state of a protective cover combined with the electronic device is illustrated. The electronic device may include a smart phone device, and the protective cover may include a magnet 810. In addition, the electronic device may include a hall IC 830, which may be also referred to as a state recognition sensor, and a proximity sensor 850.

FIGS. 8A and 8B illustrate a state in which the magnet 810 included in the protective cover can move in four directions. In other words, because the protective cover is combined with the electronic device but is not completely fixed to the electronic device, there is a possibility in which the protective cover moves minutely or is detached from the electronic device regardless of the user's intention, in the middle of carrying the electronic device. More particularly, when a user moves with putting the electronic device in his/her pocket or bag, there is an increasing possibility in which the protective cover moves minutely or is detached from the electronic device regardless of the user's intention.

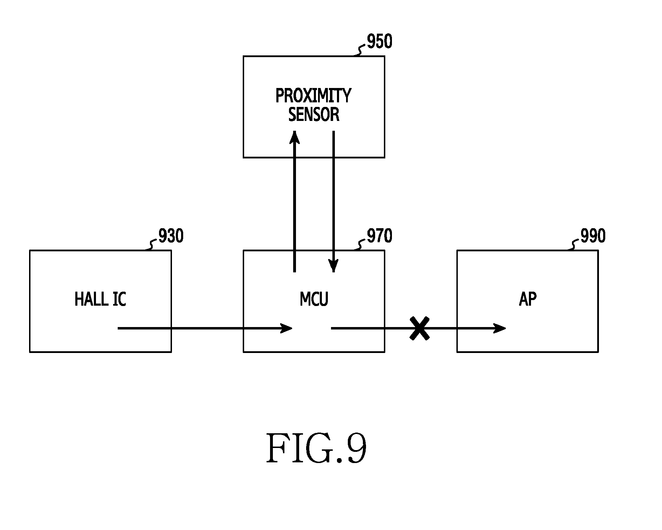

In a case where the protective cover moves minutely or is detached from the electronic device regardless of the user's intention as above, the electronic device may wrongly determine that the protective cover is open, despite the fact that the protective cover is closed. To address this issue, there is a need to use all of the hall IC 830 and the proximity sensor 850. Description of a concrete process will be made in FIG. 9 below.

FIG. 9 is a block diagram illustrating a construction of an electronic device according to an embodiment of the present disclosure.

Referring to FIG. 9, the electronic device includes a hall IC 930, a proximity sensor 950, a MCU 970, and an AP 990. The hall IC 930 measures an intensity of a magnetic field of a magnetic object provided in a protective cover combined with the electronic device. The proximity sensor 950 measures a distance with the protective cover. The MCU 970 determines an open or close state of the protective cover based on the intensity of the magnetic field and the distance. The AP 990 generally controls the electronic device.

The hall IC 930 may be also referred to as a state recognition sensor. The proximity sensor 950 may include a fiber-optic proximity sensor, a high-frequency oscillation-type proximity sensor, an electromagnetic proximity sensor, and a capacitive proximity sensor. The proximity sensor 950 generally determines a proximity of an object through infrared. Depending on a specific threshold value, the proximity may be determined differently.

The MCU 970 is a dedicated processor for controlling a specific system. According to an embodiment of the present disclosure, the MCU 970 may generally control a plurality of sensors included in the electronic device. The AP 990 may drive an operating system or an application program to control a plurality of hardware or software constituent elements connected to the AP 990, and may perform processing and operation of various data including multimedia data.

In this case, the MCU 970 has a feature of being a low power processor having small power consumption compared to the AP 990. For example, the AP 990 consumes, upon driving, an electric current of hundreds of mA to the minimum whereas the MCU 970 consumes, upon driving, an electric current of about 1 mA.

Accordingly, before the AP 990 is operated, a system is controlled through the MCU 970 and thereafter, only if needed, the AP 990 is operated and, otherwise, the AP 990 is not operated. By doing so, it can greatly decrease power consumption of the whole system.

In accordance with an embodiment of the present disclosure, the content of the present disclosure will be described below. Firstly, if there is a change of a magnetic field induced by a magnetic object provided in a protective cover combined with an electronic device, the hall IC 930 measures a present intensity of the magnetic field of the magnetic object.

For example, when assuming the hall IC 930 as a basis, an instantaneous change of a position of the magnet or other magnetic object included in the protective cover leads to a change of a magnetic field of the magnet or other magnet object. In this case, on the premise that there is a change of a state of the protective cover, the hall IC 930 measures a present intensity of the magnetic field of the magnetic object. Thereafter, the hall IC 930 transmits the measured intensity value of the magnetic field to the MCU 970.

After receiving the magnetic field intensity from the hall IC 930, the MCU 970 transmits a signal for driving the proximity sensor 950 connected with the MCU 970, to the proximity sensor 950, thereby activating the proximity sensor 950.

Upon receiving the signal, the proximity sensor 950 uses infrared to measure a distance between the protective cover and the proximity sensor 950. The proximity sensor 950 transmits the distance value to the MCU 970.

Thereafter, the MCU 970 determines a state of the protective cover, based on the magnetic field intensity value received from the hall IC 930 and the distance value received from the proximity sensor 950.

If it is determined that the intensity value of the magnetic field measured through the hall IC 930 is equal to or is greater than a first threshold value, the MCU 970 may determine that a first state of the protective cover is a close state. On the other hand, if it is determined that the intensity value of the magnetic field measured through the hall IC 930 is less than the first threshold value, the MCU 970 may determine that the first state of the protective cover is an open state.

In addition, in a case where the distance value between the protective cover and the proximity sensor 950 measured through the proximity sensor 950 is less than a second threshold value, the MCU 970 may determine that a second state of the protective cover is a proximal state. On the other hand, if the distance value is equal to or is greater than the second threshold value, the MCU 970 may determine that the second state of the protective cover is a non-proximal state.

At this time, the threshold value may be determined as an arbitrary value. According to an embodiment of the present disclosure, since it is meaningful to distinguish a case that the protective cover is attached to the electronic device and a case that the protective cover is detached from the electronic device, the second threshold value is desirably determined as a relatively small value of the unit of mm. As a result, it may be determined that the proximal state of the second state is substantially the same state as the close state of the first state, and it may be determined that the non-proximal state of the second state is substantially the same state as the open state of the first state.

In an embodiment of the present disclosure, the first state may be determined to be the open state and the second state may be determined to be the proximal state. If detecting information of the sensors is inconsistent with each other as above, this may cause an issue of making unclear on a basis of determination of which sensor the electronic device performs a subsequent operation.

According to an embodiment of the present disclosure, the MCU 970 determines that in a case where the first state is determined to be the open state and the second state is determined to be the proximal state, it is an abnormal state in which the protective cover moves minutely or is detached from the electronic device regardless of the user's intention, not a normal state in which the protective cover moves minutely or is detached from the electronic device according to a user's intention.

In other words, in a case where the first state is determined to be the open state and the second state is determined to be the proximal state, the MCU 970 determines that the hall IC 930 wrongly recognizes as if the protective cover moved minutely or was detached from the electronic device according to a user's intention in a normal manner, despite the fact that the protective cover moves minutely or is detached from the electronic device regardless of the user's intention.

As a result, with disregarding the determination of the hall IC 930, the MCU 970 finally determines that the protective cover is close, not open, based on the determination of the proximity sensor 950 that the protective cover is in the proximal state. Accordingly, the MCU 970 maintains a present state of the electronic device as ever, without an operation of activating various constituent elements included in the electronic device.

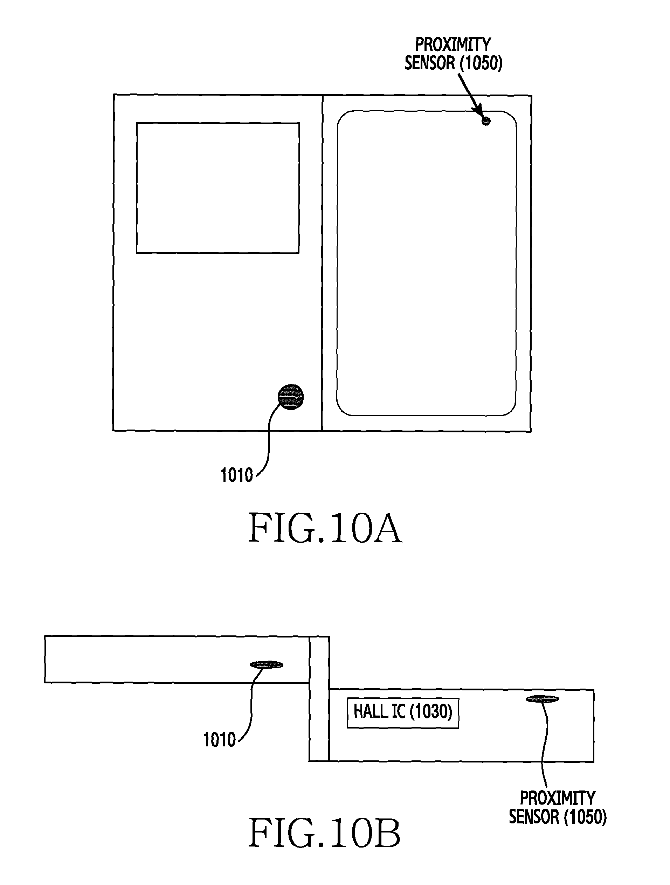

FIGS. 10A and 10B illustrate an electronic device according to an embodiment of the present disclosure. FIG. 10A illustrates a plane diagram of the electronic device according to an embodiment of the present disclosure, and FIG. 10B illustrates a cross section of the electronic device.

Referring to FIGS. 10A and 10B, the electronic device may include a smart phone device, and a protective cover combined with the electronic device may include a magnet 1010. In addition, the electronic device may include a hall IC 1030, which may be also referred to as a state recognition sensor, and a proximity sensor 1050.

FIGS. 10A and 10B illustrate a state in which the protective cover is completely open. In other words, the magnet 1010 included in the protective cover is installed in a position being completely isolated from the hall IC 1030.

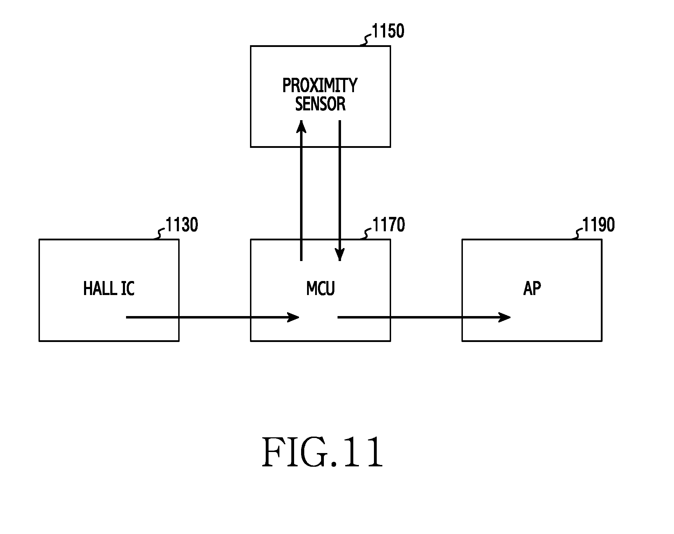

FIG. 11 is a block diagram illustrating a construction of an electronic device according to an embodiment of the present disclosure.

Referring to FIG. 11, the electronic device includes a hall IC 1130, a proximity sensor 1150, a MCU 1170, and an AP 1190. The hall IC 1130 measures an intensity of a magnetic field of a magnetic object provided in a protective cover combined with the electronic device. The proximity sensor 1150 measures a distance with the protective cover. The MCU 1170 determines an open or close state of the protective cover based on the intensity of the magnetic field and the distance. The AP 1190 generally controls the electronic device.

The hall IC 1130 may be also referred to as a state recognition sensor. The proximity sensor 1150 may include a fiber-optic proximity sensor, a high-frequency oscillation-type proximity sensor, an electromagnetic proximity sensor, and a capacitive proximity sensor. The proximity sensor 1150 generally determines a proximity of an object through infrared. Depending on a specific threshold value, the proximity may be determined differently.

The MCU 1170 is a dedicated processor for controlling a specific system. According to an embodiment of the present disclosure, the MCU 1170 may generally control a plurality of sensors included in the electronic device. In addition, the AP 1190 may drive an operating system or an application program to control a plurality of hardware or software constituent elements connected to the AP 1190, and may perform processing and operation of various data including multimedia data.

In this case, the MCU 1170 has a feature of being a low power processor having small power consumption compared to the AP 1190. For example, the AP 1190 consumes, upon driving, an electric current of hundreds of mA to the minimum whereas the MCU 1170 consumes, upon driving, an electric current of about 1 mA. Accordingly, before the AP 1190 is operated, a system is controlled through the MCU 1170 and thereafter, only if needed, the AP 1190 is operated and, otherwise, the AP 1190 is not operated. By doing so, it can greatly decrease power consumption of the whole system.

In accordance with an embodiment of the present disclosure, the content of the present disclosure will be described below. Firstly, if there is a change of a magnetic field induced by a magnetic object provided in a protective cover combined with an electronic device, the hall IC 1130 measures a present intensity of the magnetic field of the magnetic object.

For example, when assuming the hall IC 1130 as a basis, an instantaneous change of a position of the magnet or other magnetic object included in the protective cover leads to a change of a magnetic field of the magnet or other magnet object. In this case, on the premise that there is a change of a state of the protective cover, the hall IC 1130 measures a present intensity of the magnetic field of the magnetic object. Thereafter, the hall IC 1130 transmits the measured intensity value of the magnetic field to the MCU 1170.

After receiving the magnetic field intensity from the hall IC 1130, the MCU 1170 transmits a signal for driving the proximity sensor 1150 connected with the MCU 1170, to the proximity sensor 1150, thereby activating the proximity sensor 1150.

Upon receiving the signal, the proximity sensor 1150 uses infrared to measure a distance between the protective cover and the proximity sensor 1150. The proximity sensor 1150 transmits the distance value to the MCU 1170.

Thereafter, the MCU 1170 determines a state of the protective cover, based on the magnetic field intensity value received from the hall IC 1130 and the distance value received from the proximity sensor 1150.

If it is determined that the intensity value of the magnetic field measured through the hall IC 1130 is equal to or is greater than a first threshold value, the MCU 1170 may determine that a first state of the protective cover is a close state. On the other hand, if it is determined that the intensity value of the magnetic field measured through the hall IC 1130 is less than the first threshold value, the MCU 1170 may determine that the first state of the protective cover is an open state.

In addition, in a case where the distance value between the protective cover and the proximity sensor 1150 measured through the proximity sensor 1150 is less than a second threshold value, the MCU 1170 may determine that a second state of the protective cover is a proximal state. On the other hand, if the distance value is equal to or is greater than the second threshold value, the MCU 1170 may determine that the second state of the protective cover is a non-proximal state.

At this time, the threshold value may be determined as an arbitrary value. According to an embodiment of the present disclosure, since it is meaningful to distinguish a case that the protective cover is attached to the electronic device and a case that the protective cover is detached from the electronic device, the second threshold value is desirably determined as a relatively small value of the unit of mm. As a result, it may be determined that the proximal state of the second state is substantially the same state as the close state of the first state, and it may be determined that the non-proximal state of the second state is substantially the same state as the open state of the first state.

In an embodiment of the present disclosure, the first state may be determined to be the open state and the second state may be determined to be the proximal state. In this context, the MCU 1170 finally determines that the protective cover is open normally, and activates various constituent elements included within the electronic device such that a user can use the electronic device in a normal manner. For example, the electronic device may drive the AP 1190 to activate a display (not shown in FIG. 11) included in the electronic device. In addition, the electronic device may activate a PMIC (not shown in FIG. 11) to manage power of the electronic device.

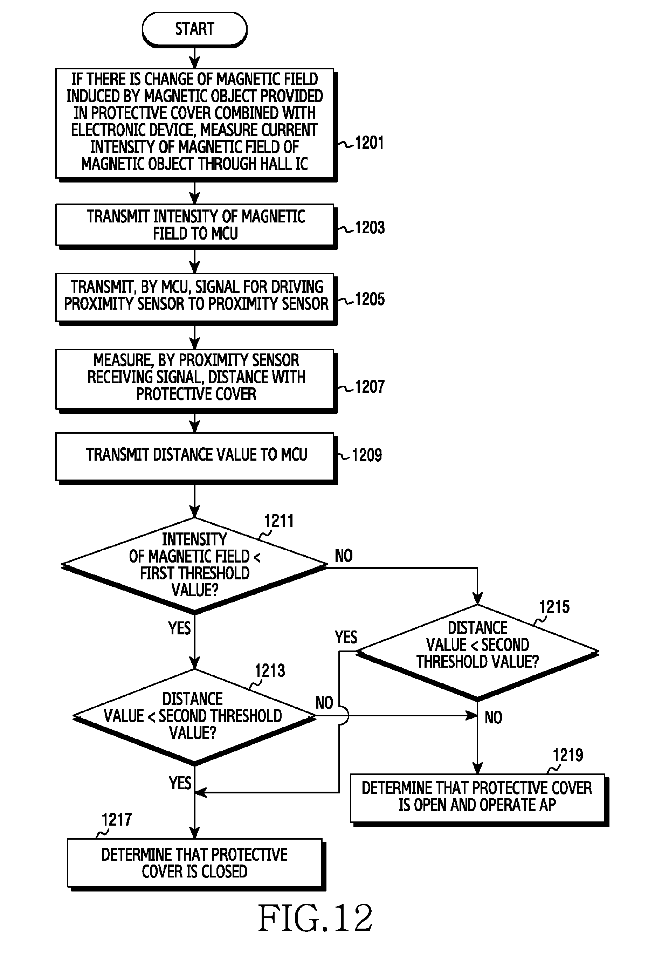

FIG. 12 is a flowchart illustrating a method for power consumption improvement according to an embodiment of the present disclosure.

Referring to FIG. 12, in operation 1201, if there is a change of a magnetic field induced by a magnetic object provided in a protective cover combined with an electronic device, a hall IC measures a present intensity of the magnetic field of the magnetic object. For example, when assuming the hall IC as a basis, an instantaneous change of a position of a magnet or other magnetic object included in the protective cover leads to a change of a magnetic field of the magnet or other magnet object. In this case, on the premise that there is a change of a state of the protective cover, the hall IC measures a present intensity of the magnetic field of the magnetic object.

Thereafter, in operation 1203, the hall IC transmits the intensity value of the magnetic field measured by the hall IC, to the MCU. In addition, in operation 1205, after receiving the magnetic field intensity from the hall IC, the MCU transmits a signal for driving the proximity sensor, to the proximity sensor. This is achieved for the MCU to more accurately determine a present state of the protective cover as a result of recognizing the fact that there is a change of the state of the protective cover by the hall IC.

Thereafter, in operation 1207, upon receiving the signal, the proximity sensor measures a distance between the protective cover and the proximity sensor. As mentioned earlier in FIG. 7, the proximity sensor may use infrared to measure the distance, for example. In other words, the distance may be measured based on the speed of light and the traveling time of infrared which starts from the proximity sensor and reflects back from an adjacent object to the proximity sensor.

In addition, in operation 1209, the proximity sensor transmits the distance value measured by the proximity sensor, to the MCU. Thereafter, the MCU finally determines a present state of the protective cover based on the magnetic field intensity value received from the hall IC and the distance value received from the proximity sensor.

Thereafter, in operation 1211, the MCU compares the intensity of the magnetic field and a first threshold value. If the intensity of the magnetic field is less than the first threshold value, the MCU goes to operation 1213. Thereafter, in operation 1213, the MCU compares the distance value and a second threshold value. If the distance value is less than the second threshold value, the MCU finally determines that the protective cover is closed in operation 1217. On the other hand, if the distance value is greater than the second threshold value, the MCU finally determines that the protective cover is open in operation 1219, and the MCU may operate a device, such as an AP or PMIC combined with the MCU.

In addition, in operation 1211, compares the intensity of the magnetic field and the first threshold value. If the intensity of the magnetic field is greater than the first threshold value, the MCU proceeds to operation 1215. Thereafter, in operation 1215, the MCU compares the distance value and the second threshold value. If the distance value is less than the second threshold value, the MCU finally determines that the protective cover is closed. On the other hand, if the distance value is greater than the second threshold value, the MCU finally determines that the protective cover is open, and the MCU may operate the device, such as the AP or PMIC combined with the MCU.

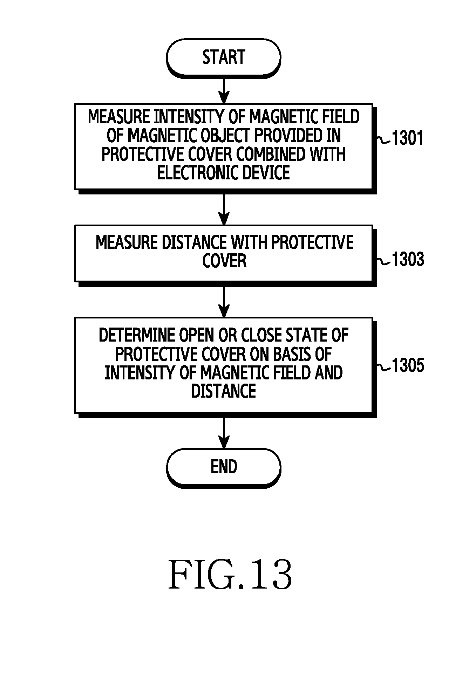

FIG. 13 is a flowchart illustrating a method for power consumption improvement according to an embodiment of the present disclosure.

Referring to FIG. 13, in operation 1301, a first sensor measures an intensity of a magnetic field of a magnetic object provided in a protective cover combined with an electronic device. In other words, if there is a change of the magnetic field induced by the magnetic object, the first sensor measures a present intensity of the magnetic field of the magnetic object.

For example, when assuming the first sensor as a basis, an instantaneous change of a position of a magnetic object provided in the protective cover leads to a change of a magnetic field. In this case, on the premise that there is a change of a state of the protective cover, the first sensor measures a present intensity of the magnetic field of the magnetic object.

Thereafter, in operation 1303, a second sensor measures a distance between the protective cover and the second sensor. As mentioned earlier in FIG. 7, the second sensor may use infrared to measure the distance, for example. In other words, the distance may be measured based on the speed of light and the traveling time of infrared which starts from the second sensor and reflects back from an adjacent object to the second sensor.

In addition, in operation 1305, a processor determines an open or close state of the protective cover based on the magnetic field intensity and the distance. The processor compares the magnetic field intensity and a first threshold value to determine a first state of the protective cover. In other words, if the magnetic field intensity is less than the first threshold value, the processor may determine the first state as an open state. On the other hand, if the magnetic field intensity is greater than the first threshold value, the processor may determine the first state as a close state.

In addition, the processor compares the distance and a second threshold value to determine a second state of the protective cover. If the distance value is less than the first threshold value, the processor may determine the second state as a proximal state. On the other hand, if the distance value is greater than the second threshold value, the processor may determine the second state as a non-proximal state.

As a result, the processor determines an open or close state of the protective cover according to a condition of ANDing the first state and the second state. If the first state is determined to be the open state and the second state is determined to be the proximal state, the processor finally determines that the protective cover is closed. In addition, if the first state is determined to be the open state and the second state is determined to be the non-proximal state, the processor finally determines that the protective cover is open, and may operate a device, such as an AP or PMIC combined with the processor.

In addition, if the first state is determined to be the close state and the second state is determined to be the proximal state, the processor finally determines that the protective cover is closed. In addition, if the first state is determined to be the close state and the second state is determined to be the non-proximal state, the processor finally determines that the protective cover is open, and may operate the device, such as the AP or PMIC combined with the processor.

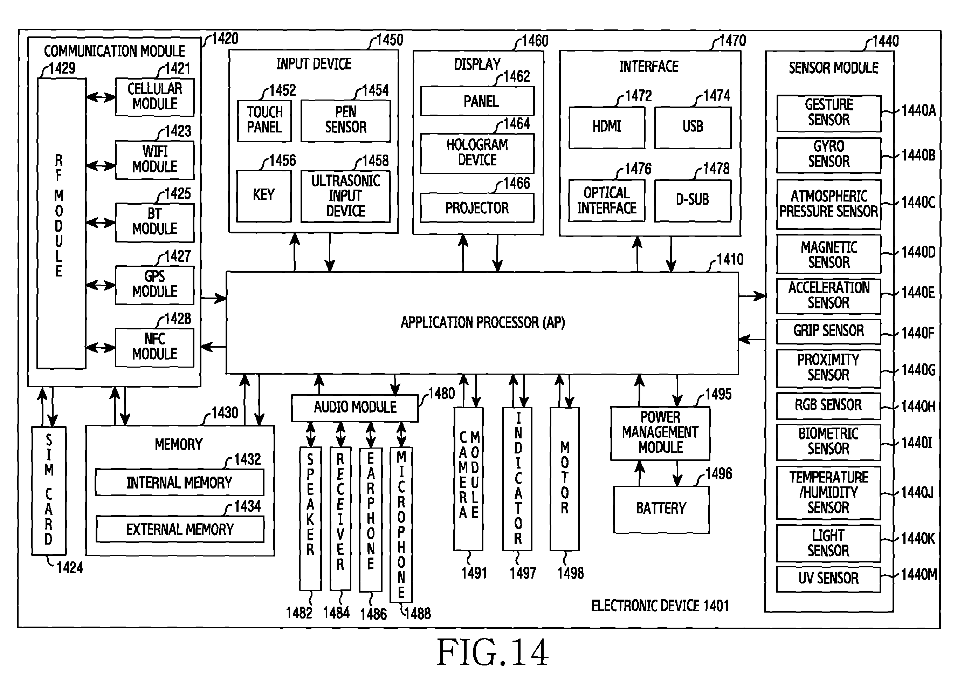

FIG. 14 is a block diagram illustrating a construction of an electronic device according to various embodiments of the present disclosure.

Referring to FIG. 14, an electronic device 1401 may include, for example, the whole or part of the electronic device 101 illustrated in FIG. 1. In addition, the electronic device 1401 may include one or more APs 1410, a communication module 1420, a Subscriber Identification Module (SIM) card 1424, a memory 1430, a sensor module 1440, an input device 1450, a display 1460, an interface 1470, an audio module 1480, a camera module 1491, a power management module 1495, a battery 1496, an indicator 1497, and a motor 1498.

The AP 1410 may drive an operating system or an application program to control a plurality of hardware or software constituent elements connected to the AP 1410, and may perform processing and operation of various data including multimedia data. The AP 1410 may be, for example, implemented as a System On Chip (SoC). According to an embodiment of the present disclosure, the AP 1410 may further include a Graphical Processing Unit (GPU) (not shown).

The communication module 1420 (e.g., the communication interface 160) may perform data transmission/reception in communication between other electronic devices (e.g., the other electronic device 104 or the server 106) that are connected with the electronic device 1401 (e.g., the electronic device 101) through a network. According to an embodiment of the present disclosure, the communication module 1420 may include a cellular module 1421, a WiFi module 1423, a BT module 1425, a GPS module 1427, an NFC module 1428, and a Radio Frequency (RF) module 1429.

The cellular module 1421 may provide voice telephony, video telephony, a text service, an Internet service, and the like, through a telecommunication network (e.g., LTE, LTE-A, CDMA, WCDMA, UMTS, WiBro, or GSM). In addition, the cellular module 1421 may, for example, use a SIM (e.g., the SIM card 1424) to perform electronic device distinction and authorization within the telecommunication network. According to an embodiment of the present disclosure, the cellular module 1421 may perform at least some functions among functions that the AP 1410 may provide. For example, the cellular module 1421 may perform at least a part of a multimedia control function.

According to an embodiment of the present disclosure, the cellular module 1421 may include a Communication Processor (CP). In addition, the cellular module 1421 may be, for example, implemented as a SoC. In FIG. 14, the constituent elements, such as the cellular module 1421 (e.g., the communication processor), the memory 1430, or the power management module 1495 are illustrated as constituent elements apart from the AP 1410 but, according to an embodiment of the present disclosure, the AP 1410 may be implemented to include at least some (e.g., the cellular module 1421) of the aforementioned constituent elements.

According to an embodiment of the present disclosure, the AP 1410 or the cellular module 1421 (e.g., the communication processor) may load an instruction or data, which is received from a non-volatile memory connected to each of the AP 1410 and the cellular module 1421 or at least one of other constituent elements, to a volatile memory and process the loaded instruction or data. In addition, the AP 1410 or the cellular module 1421 may store data, which is received from at least one of other constituent elements or generated by at least one of the other constituent elements, in the non-volatile memory.

The WiFi module 1423, the BT module 1425, the GPS module 1427 or the NFC module 1428 each may include, for example, a processor for processing data transmitted/received through the corresponding module. In FIG. 14, the cellular module 1421, the WiFi module 1423, the BT module 1425, the GPS module 1427 or the NFC module 1428 is each illustrated as a separate block but, according to an embodiment of the present disclosure, at least some (e.g., two or more) of the cellular module 1421, the WiFi module 1423, the BT module 1425, the GPS module 1427 or the NFC module 1428 may be included within one IC or IC package. For example, at least some (e.g., the communication processor corresponding to the cellular module 1421 and a WiFi processor corresponding to the WiFi module 1423) of the processors each corresponding to the cellular module 1421, the WiFi module 1423, the BT module 1425, the GPS module 1427 or the NFC module 1428 may be implemented as one SoC.

The RF module 1429 may perform transmission/reception of data, for example, transmission/reception of an RF signal. Though not illustrated, the RF module 1429 may include, for example, a transceiver, a Power Amplifier Module (PAM), a frequency filter, a Low Noise Amplifier (LNA), and the like. In addition, the RF module 1429 may further include a component for transmitting/receiving an electromagnetic wave in a free space for wireless communication, for example, a conductor or a conductive wire.

FIG. 14 illustrates that the cellular module 1421, the WiFi module 1423, the BT module 1425, the GPS module 1427 and the NFC module 1428 share one RF module 1429 with one another but, according to an embodiment of the present disclosure, at least one of the cellular module 1421, the WiFi module 1423, the BT module 1425, the GPS module 1427 or the NFC module 1428 may perform transmission/reception of an RF signal through a separate RF module.

The SIM card 1424 may be a card including a subscriber identification module, and may be inserted into a slot provided in a specific position of the electronic device 1401. The SIM card 1424 may include unique identification information (e.g., an IC Card ID (ICCID)) or subscriber information (e.g., an International Mobile Subscriber Identity (IMSI)).

The memory 1430 (e.g., the memory 130) may include an internal memory 1432 or an external memory 1434. The internal memory 1432 may include, for example, at least one of a volatile memory (for example, a Dynamic Random Access Memory (DRAM), a Static RAM (SRAM) and a Synchronous Dynamic RAM (SDRAM)) or a non-volatile memory (for example, a One-Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a Not AND (NAND) flash memory, and a Not OR (NOR) flash memory).

According to an embodiment of the present disclosure, the internal memory 1432 may be a Solid State Drive (SSD). The external memory 1434 may further include a flash drive, for example, Compact Flash (CF), Secure Digital (SD), micro-SD, mini-SD, extreme Digital (xD), a memory stick, and the like. The external memory 1434 may be operatively connected with the electronic device 1401 through various interfaces. According to an embodiment of the present disclosure, the electronic device 1401 may further include a storage device (or a storage media), such as a hard drive.

The sensor module 1440 may measure a physical quantity or detect an activation state of the electronic device 1401, and convert measured or detected information into an electric signal. The sensor module 1440 may include, for example, at least one of a gesture sensor 1440A, a gyro sensor 1440B, an air pressure sensor 1440C, a magnetic sensor 1440D, an acceleration sensor 1440E, a grip sensor 1440F, a proximity sensor 1440G, a color sensor 1440H (e.g., a Red, Green, Blue (RGB) sensor), a bio-physical sensor 1440I, a temperature/humidity sensor 1440J, an illumination sensor 1440K, or a Ultraviolet (UV) sensor 1440M. Additionally or alternatively, the sensor module 1440 may include, for example, an E-nose sensor (not shown), an Electromyography (EMG) sensor (not shown), an Electroencephalogram (EEG) sensor (not shown), an Electrocardiogram (ECG) sensor (not shown), an IR sensor (not shown), an iris sensor (not shown), or a fingerprint sensor (not shown). The sensor module 1440 may further include a control circuit for controlling at least one or more sensors belonging to therein.

The input device 1450 may include a touch panel 1452, a (digital) pen sensor 1454, a key 1456, or an ultrasonic input device 1458. The touch panel 1452 may, for example, recognize a touch input in at least one of a capacitive overlay method, a pressure sensitive method, an infrared beam method, or an acoustic wave method. In addition, the touch panel 1452 may also further include a control circuit. In a case of the capacitive overlay method, physical contact or proximity recognition is possible. The touch panel 1452 may also further include a tactile layer. In this case, the touch panel 1452 may provide a tactile response to a user.

The (digital) pen sensor 1454 may be implemented in the same or similar method to receiving a user's touch input or using a separate sheet for recognition. The key 1456 may include, for example, a physical button, an optical key, or a keypad. The ultrasonic input device 1458 is a device capable of identifying data by detecting a sound wave with a microphone (e.g., a microphone 1488) in the electronic device 1401 through an input tool generating an ultrasonic signal, and enables wireless recognition. According to an embodiment of the present disclosure, the electronic device 1401 may also use the communication module 1420 to receive a user input from an external device (e.g., a computer, a server, and the like) connected with the electronic device 1401.

The display 1460 (e.g., the display 150) may include a panel 1462, a hologram device 1464, or a projector 1466. The panel 1462 may, for example, be a Liquid Crystal Display (LCD) or an Active-Matrix Organic Light-Emitting Diode (AMOLED). The panel 1462 may be implemented to be flexible, transparent, or wearable. The panel 1462 may be also constructed as one module along with the touch panel 1452. The hologram device 1464 may show a three-dimensional image in the air by using interference of light. The projector 1466 may project light to a screen to display an image. The screen may be, for example, located inside or outside the electronic device 1401. According to an embodiment of the present disclosure, the display 1460 may further include a control circuit for controlling the panel 1462, the hologram device 1464, or the projector 1466.

The interface 1470 may include, for example, an HDMI 1472, a USB 1474, an optical interface 1476, or a D-subminiature (D-sub) 1478. The interface 1470 may be included, for example, in the communication interface 170 shown in FIG. 1. Additionally or alternatively, the interface 1470 may include, for example, a Mobile High-Definition Link (MHL) interface, an SD card/Multi Media Card (MMC) interface or an Infrared Data Association (IrDA) standard interface.

The audio module 1480 may convert a voice and an electric signal interactively. At least some constituent elements of the audio module 1480 may be included, for example, in the input/output interface 140 illustrated in FIG. 1. The audio module 1480 may, for example, process sound information inputted or outputted through a speaker 1482, a receiver 1484, an earphone 1486, or the microphone 1488.

The camera module 1491 is a device able to take a still picture and a moving picture. According to an embodiment of the present disclosure, the camera module 1491 may include one or more image sensors (e.g., a front sensor or a rear sensor), a lens (not shown), an Image Signal Processor (ISP) (not shown), or a flash (not shown) (e.g., an LED or a xenon lamp).

The power management module 1495 may manage electric power of the electronic device 1401. Though not illustrated, the power management module 1495 may include, for example, a PMIC, a charger IC, or a battery or fuel gauge.

The PMIC may be, for example, mounted within an integrated circuit or a SoC semiconductor. A charging method may be divided into a wired charging method and a wireless charging method. The charger IC may charge the battery 1496, and may prevent the introduction of overvoltage or overcurrent from an electric charger. According to an embodiment of the present disclosure, the charger IC may include a charger IC for at least one of the wired charging method or the wireless charging method. The wireless charging method may, for example, be a magnetic resonance method, a magnetic induction method, or an electromagnetic wave method. A supplementary circuit for wireless charging, for example, a circuit, such as a coil loop, a resonance circuit, or a rectifier may be added.

The battery or fuel gauge may, for example, measure a level of the battery 1496, a voltage during charging, a current or a temperature. The battery 1496 may generate or store electricity, and use the stored or generated electricity to supply power to the electronic device 1401. The battery 1496 may include, for example, a rechargeable battery or a solar battery.

The indicator 1497 may display a specific status of the electronic device 1401 or a part (e.g., the AP 1410) thereof, for example a booting state, a message state, or a charging state. The motor 1498 may convert an electric signal into a mechanical vibration. Though not illustrated, the electronic device 1401 may include a processing device (e.g., a GPU) for mobile TV support. The processing device for mobile TV support may, for example, process media data according to the standards of Digital Multimedia Broadcasting (DMB), Digital Video Broadcasting (DVB), or a media flow.

Each of the aforementioned constituent elements of the electronic device according to various embodiments of the present disclosure may consist of one or more components, and a name of the corresponding constituent element may be different according to the kind of electronic device. The electronic device according to various embodiments of the present disclosure may include at least one of the aforementioned constituent elements, and may omit some constituent elements or further include additional other constituent elements. In addition, some of the constituent elements of the electronic device according to various embodiments of the present disclosure are combined to form one entity, thereby identically performing the functions of the corresponding constituent elements before combination.

The term "module" used in various embodiments of the present disclosure may, for example, represent a unit including one of hardware, software, or firmware or a combination of two or more of them. The "module" may be, for example, used interchangeably with the terms "unit", "logic", "logical block", "component", or "circuit". The "module" may be also the minimum unit of an integrally constructed component or a part thereof. The "module" may be also the minimum unit performing one or more functions or a part thereof. The "module" may be implemented mechanically or electronically. For example, the "module" according to various embodiments of the present disclosure may include at least one of an Application-Specific Integrated Circuit (ASIC) chip, Field - Programmable Gate Arrays (FPGAs) or a programmable-logic device performing some operations, which has been well known to the art or is to be developed in the future.

According to various embodiments of the present disclosure, at least a part of an apparatus (e.g., modules or functions thereof) or method (e.g., operations) according to various embodiments of the present disclosure may be, for example, implemented by an instruction which is stored in a computer-readable storage media in a form of a programming module. In a case where the instruction is executed by one or more processors (e.g., the processor 120), the one or more processors may perform functions corresponding to the instructions. The computer-readable storage media may be, for example, the memory 130. At least a part of the programming module may be, for example, implemented (e.g., executed) by the processor 120. At least a part of the programming module may include, for example, modules, programs, routines, sets of instructions, or processes for performing one or more functions.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The module or the programming module according to various embodiments of the present disclosure may include at least one or more of the aforementioned constituent elements, or omit some of the aforementioned constituent elements, or further include additional other constituent elements. Operations carried out by the module, the programming module or the other constituent elements according to various embodiments of the present disclosure may be executed in a sequential, parallel, repeated or heuristic method. In addition, some operations may be executed in different order or may be omitted, or other operations may be added.

As described above, the present disclosure uses both a sensor for measuring an intensity of a magnetic field and a sensor for measuring a distance to accurately determine a state of a protective cover combined with an electronic device, thereby being capable of preventing unnecessary driving of the electronic device due to wrong determination of a present state of the protective cover, and reduces unnecessary power consumption of the electronic device, thereby being capable of more increasing the power efficiency of the electronic device.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a first body;
a second body being folded or unfolded with respect to the first body;
a first sensor sensing a signal according to the folding/unfolding of the second body;
a second sensor sensing a signal according to the folding/unfolding of the second body, in a position different from the first sensor; and
a processor operatively connected with the first sensor and the second sensor,
wherein the processor determines a folded/unfolded state of the second body in accordance with the sensing signals of the first sensor and second sensor.

2. The device of claim 1, wherein the first body is the electronic device, and
the second body is a protective cover.

3. The device of claim 2, wherein the first sensor is a hall sensor arranged in the first body facing a magnetic object installed in the second body, and detecting an intensity of a magnetic field of the magnetic object of the second body, and
the second sensor is a proximity sensor arranged in a position diametrically opposite to the first sensor of the first body and sensing the proximity or non-proximity of the second body.

4. The device of claim 3, wherein the second sensor is a photo sensor, and wherein the processor determines the folding or unfolding of the protective cover on the basis of the magnetic field intensity sensed by the first sensor and a distance sensed by the second sensor.

5. The device of claim 4, wherein, if an output of the first sensor is an unfolded state and an output of the second sensor is a folded state, the processor determines that a state of the protective cover is a folded state.

6. The device of claim 4, wherein, if an output of the first sensor is a folded state and an output of the second sensor is an unfolded state, the processor determines that a state of the protective cover is an unfolded state.

7. The device of claim 4, wherein the processor receives an output of the first sensor and, if the output of the first sensor is an unfolded state, the processor activates the second sensor and receives an output of the second sensor

8. A control method of an electronic device, the method comprising:
receiving a first sensing signal and a second sensing signal according to the folding/unfolding of a first body and second body of the electronic device; and
determining a folded or unfolded state of the second body, based on the first sensing signal and the second sensing signal,
wherein the first sensing signal is sensed by a first sensor,
the second sensing signal is sensed by a second sensor installed in a position different from the first sensor, and
the determination is determined by a processor operatively connected with the first sensor and the second sensor.

9. The method of claim 8, wherein the first body is the electronic device, and
the second body is a protective cover.

10. The method of claim 9, wherein the first sensor is a hall sensor arranged in the first body facing a magnetic object installed in the second body, and detecting an intensity of a magnetic field of the magnetic object of the second body, and
the second sensor is a proximity sensor arranged in a position diametrically opposite to the first sensor of the first body and sensing the proximity or non-proximity of the second body.

11. The method of claim 10, wherein the second sensor is a photo sensor, and,
wherein the determining determines, by the processor, the folding or unfolding of the protective cover on the basis of the magnetic field intensity sensed by the first sensor and a distance sensed by the second sensor.

12. The method of claim 11, wherein, if an output of the first sensor is an unfolded state and an output of the second sensor is a folded state, the determining determines, by the processor, that a state of the protective cover is a folded state.

13. The method of claim 11, wherein, if an output of the first sensor is a folded state and an output of the second sensor is an unfolded state, the determining determines, by the processor, that a state of the protective cover is an unfolded state.

14. The method of claim 11, wherein the determining receives, by the processor, an output of the first sensor and, if the output of the first sensor is an unfolded state, activates the second sensor and receives an output of the second sensor.

15. A computer-readable storage medium storing a program for performing a method comprising receiving a first sensing signal and a second sensing signal according to the folding/unfolding of a first body and second body of the electronic device, and determining a folded or unfolded state of the second body, based on the first sensing signal and the second sensing signal, the first sensing signal being sensed by a first sensor, the second sensing signal being sensed by a second sensor installed in a position different from the first sensor, and the determination being determined by a processor operatively connected with the first sensor and the second sensor.
